**Europäisches Patentamt**

**European Patent Office**

**Office européen des brevets**

(19)

(11) Veröffentlichungsnummer : **0 387 421 B1**

(12) # EUROPÄISCHE PATENTSCHRIFT

(45) Veröffentlichungstag der Patentschrift :
**22.07.92 Patentblatt 92/30**

(51) Int. Cl.$^5$ : **E04F 13/08, E04B 9/26**

(21) Anmeldenummer : **89123729.9**

(22) Anmeldetag : **22.12.89**

(54) **Wand- und/oder Deckenverkleidung, insbesondere für Schiffe.**

(30) Priorität : **14.03.89 DE 8903124 U**

(43) Veröffentlichungstag der Anmeldung :
**19.09.90 Patentblatt 90/38**

(45) Bekanntmachung des Hinweises auf die
Patenterteilung :
**22.07.92 Patentblatt 92/30**

(84) Benannte Vertragsstaaten :
**BE DE ES FR GB GR IT NL**

(56) Entgegenhaltungen :
**DE-B- 1 607 702**
**DE-U- 8 805 769**
**FR-A- 1 371 274**
**FR-A- 2 028 681**
**US-A- 1 816 450**
**US-A- 3 312 027**
**US-A- 4 038 799**

(73) Patentinhaber : **G + H MONTAGE GmbH**
**Westendstrasse 17**
**W-6700 Ludwigshafen (DE)**

(72) Erfinder : **Klentze, Peter**
**Achtern Sand 9**
**W-2000 Hamburg 56 (DE)**
Erfinder : **Günther, Horst**
**Böttcherkamp 113**
**W-2000 Hamburg 53 (DE)**

(74) Vertreter : **Fleck, Thomas, Dr.Dipl.-Chem. et al**
**Patentanwälte Raffay, Fleck & Partner**
**Postfach 32 32 17**
**W-2000 Hamburg 13 (DE)**

## Beschreibung

Die Erfindung betrifft eine Wand- und/oder Deckenverkleidung nach dem Oberbegriff des Patentanspruches 1.

Derartige Verkleidungen sind aus der FR-A-20 28 681 bekannt. Für die meisten Anwendungsbereiche ist die Befestigung mittels Klemmschienen auch ausreichend. Bei Schiffen, und insbesondere solchen, die in der Marine eingesetzt werden, sind die Belastungsansprüche jedoch weit höher. Nachteilig macht sich dann bei den bisher bekannten Verkleidungen bemerkbar, daß diese nur in einem unzureichenden Maße befestigt sind und sich leicht lösen bzw. von selbst losrütteln.

Ferner ist im Stand der Technik die DE-U-88 05 769 bekannt.

Die Lehre des vorbekannten Gebrauchsmusters fordert Isolierplatten, die Befestigungsöffnungen 14 aufweisen und zur Durchführung einer Schweißvorrichtung für einen auf den Träger aufschweißbaren Mutterkörper ausgebildet sind. Dem Mutterkörper ist ein Befestigungsbolzen zugeordnet, der mit einer die Befestigungsöffnung abdeckenden Aufnahmeplatte zentral verbunden ist. Darüber hinaus sind Befestigungs- oder Aufnahmeöffnungen vorgesehen, sowie eine Schweißvorrichtung für einen aufschweißbaren Mutterkörper eingesetzt werden muß. Außerdem muß der in die Befestigungsöffnung hineinragende Zentralkörper Spielraum haben.

Der vorliegenden Erfindung liegt deshalb die Aufgabe zugrunde, die eingangs genannte Wand- und/oder Deckenverkleidung derart zu verbessern, daß sie einerseits leicht ohne Werkzeug manuell demontierbar ist, und andererseits jedoch ebenfalls schockfeste und schalldämmende Eigenschaften aufweist.

Diese Aufgabe wird durch die im Anspruch 1 gekennzeichnete Wand- und/oder Deckenverkleidung gelöst. Erfindungsgemäß wird also zusätzlich zur Einklemmung als weitere Befestigung eine weitere Verriegelung eingesetzt, mit der die Kassetten an einer zusätzlichen Halteschiene befestigt werden. Diese zusätzliche Verriegelung ist leicht von der Außenseite der Kassetten betätigbar und erfordert keinerlei zusätzliche Werkzeuge.

Vorteilhafterweise sind die Verriegelungselemente in den Eckbereichen und/oder den Längsseiten der Kassetten angeordnet und stören dort den sonst ebenen, guten Gesamteindruck der Vielzahl aneinandergrenzender Kassetten nicht.

Insbesondere ist daran gedacht, daß die Verriegelungselemente einen Schraubknopf mit Einrastzapfen und einer Feder aufweisen, wobei der Einrastzapfen in einer Bohrung der Arretierung angeordnet ist, und die Feder im verriegelten Zustand unter Ausbildung eines Spannverschlusses gespannt ist. Durch leichtes Drehen in der gewünschten Richtung kann das Verriegelungselement aus der Arretierung gelöst oder in ihr befestigt werden.

Weitere Vorteile und Merkmale gehen aus den übrigen Unteransprüchen hervor.

Im folgenden wird ein bevorzugtes Ausführungsbeispiel anhand einer Prinzipskizze näher erläutert.

Es zeigt:

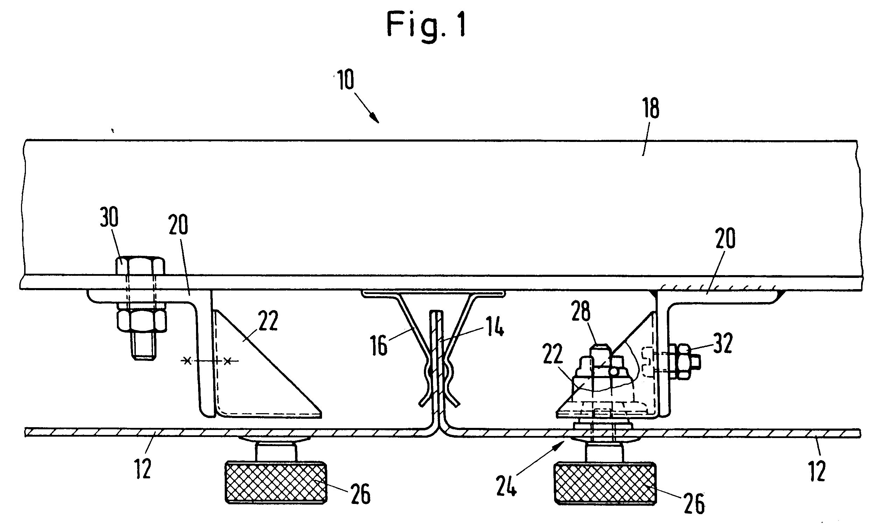

Fig. 1 einen Ausschnitt einer erfindungsgemäß gestalteten Deckenverkleidung, teilweise als Seitenansicht und im Querschnitt.

In der einzigen Figur ist die erfindungsgemäße Wand- und/oder Deckenverkleidung allgemein mit 10 bezeichnet. In der Figur sind zwei Kassetten bzw. Paneele 12 im Anschnitt gezeigt, wie sie mit ihren Seitenkanten 14 aneinanderstoßen und in der Klemmschiene 16 eingeklemmt sind. Die Klemmschiene 16 ist an einer üblichen Winkelunterkonstruktion 18 befestigt, die von der eigentlichen Decke (nicht gezeigt) herabhängt,

Um eine hervorragende Schockfestigkeit zu erzielen, werden die Kassetten 12 zusätzlich mittels eines Spannverschlusses an einer Halteschiene 20 befestigt. Der Spannverschluß besteht aus einer Arretierung 22, die fest mit der Halteschiene 20 verbunden ist und einem Verriegelungselement 24, das in die Arretierung 22 eingreift und von der Vorderseite der Kassette 12 mittels einer Rändelschraube 26 betätigbar ist, d.h. die Verriegelung kann leicht arretiert oder gelöst werden, ohne daß es hierzu irgendwelcher Werkzeuge bedarf. Die Verriegelungselemente 24 weisen einen T-förmigen Einrastzapfen 28 auf, der durch eine Bohrung in der Kassette 12 hindurchragt und im verriegelten Zustand eine nicht gezeigte Feder spannt und in einer Bohrung der Arretierung 22 aufgenommen wird.

Die Halteschiene 20 ist winkelförmig und auf der linken Seite der Figur 1 mittels einer Sechskantschraube 30 an der Unterkonstruktion 18 befestigt. Die Halteschiene 20 kann jedoch auch durch Schweißen mit der Unterkonstruktion 18 verbunden werden, wie es auf der rechten Seite der Fig. 1 gezeigt ist. Die Arretierungen 22 sind mittels Schrauben 32 an der Halteschiene befestigt.

Es dürfte einleuchten, daß die Erfindung sich für beliebige Kassettengrößen eignet. Insbesondere ist daran gedacht, pro Kassette vier Spannverschlüsse in den Eckbereichen vorzusehen. Bei größeren Kassettengrößen werden jedoch zusätzliche Spannverschlüsse auf den Längsseiten eingesetzt. Die Kassetten 12 bestehen aus 1,5 mm starkem Aluminiumblech. Andere Größen und Materialien sind jedoch denkbar, sofern letztere die gewünschte Schockfestigkeit und auch Schall dämmung als Eigenschaften erfüllen. Auch dürfte es einleuchten, daß ohne weiteres Lärmdämmaterial im Kasseteninneren angebracht werden kann.

**Patentansprüche**

1. Wand- und/oder Deckenverkleidung, insbesondere für Schiffe, mit einer Mehrzahl aneinandergrenzender Kassetten (12), die mit ihren abgekanteten Seiten- und/oder Längskanten (14) in Klemmschienen (16) befestigt sind, welche ihrerseits an einer Unterkonstruktion (18) befestigt sind, dadurch gekennzeichnet, daß zwischen den Klemmschienen (16) eine oder mehrere Halteschienen (20) mit Arretierungen (22) vorgesehen sind, in welche Verriegelungselemente (24) eingreifen, die an den Kassetten (12) befestigt und von ihren Außen- bzw. Vorderseiten manuell betätigbar sind.

2. Wand- und/oder Deckenverkleidung nach Anspruch 1, dadurch gekennzeichnet, daß die Verriegelungselemente (24) jeweils in den Eckbereichen und/oder den Längsseiten der Kassetten (24) angeordnet sind.

3. Wand- und/oder Deckenverkleidung nach Anspruch 1 und 2, dadurch gekennzeichnet, daß die Verriegelungselemente (24) einen Rändelschraubknopf (26) mit Einrastzapfen (28) und einer Feder umfassen, die im verriegelten Zustand gespannt ist.

4. Wand- und/oder Deckenverkleidung nach Anspruch 3, dadurch gekennzeichnet, daß die Arretierungen (22) eine Bohrung zur Aufnahme des Einrastzapfens unter Ausbildung eines Spannverschlusses umfassen.

5. Wand- und/oder Deckenverkleidung nach Anspruch 1 bis 5, gekennzeichnet durch ein auf der Innenseite der Kassetten (12) befestigtes Lärmdämmaterial.

6. Wand- und/oder Deckenverkleidung nach einem oder mehreren der vorstehenden Ansprüche, gekennzeichnet durch eine maximale Größe der Kassetten von 500 x 1000 mm.

7. Wand- und/oder Deckenverkleidung nach einem oder mehreren der vorstehenden Ansprüche, gekennzeichnet durch 1,5 mm starkes und seewasserbeständiges Aluminiumblech.

**Claims**

1. Wall- and/or ceiling covering, especially for ships, comprising a plurality of adjacent panels (12) abutting along their sides which are bent back at right angles and/or their longitudinal edges (14) which are held together in the clamping rail (16) which itself is fastened to a support (18) characterized in that between the clamping rails (16) there is/are provided one or more retaining rails (20) carrying detents (22) to engage with locking devices (24) which are affixed to the panels (12) and can be manually actuated from the outside or front of said panels.

2. Wall- and/or ceiling covering according to Claim 1, wherein the locking devices (24) are disposed in the corner regions and/or along the edges of the longitudinal sides of the panels (12).

3. Wall- and/or ceiling covering according to Claim 1 and 2, wherein the locking devices (24) have a knurled cylindrical head (26) and a locating stud (28) as well as a spring which, in the locked position, is under tension.

4. Wall- and/or ceiling covering according to Claim 3, wherein the detents (22) have a drilled hole for insertion of the locating stud which provides a tensioning closure.

5. Wall- and/or ceiling covering according to any one of Claims 1 to 4, wherein there is a sound-damping material attached to the inner surface of the panels.

6. Wall- and/or ceiling covering according to any one or more of the preceding Claims, wherein the maximum size of the panels is 500 x 1000 mm.

7. Wall- and/or ceiling covering according to any one or more of the preceding Claims, wherein the panels are made from aluminium sheet, resistant to corrosion by sea water, having a thickness of 1,5 mm.

**Revendications**

1. Revêtement de mur et/ou de plafond, en particulier pour navires, avec une multitude de cassettes contiguës (12) qui sont fixées avec leurs bords latéraux et/ou longitudinaux repliés (14) dans des rails de serrage (16) qui sont, à leur tour, fixés à un sous-ensemble (18), caractérisé en ce qu'un ou plusieurs rails de soutien (20) avec des blocages (22) sont prévus entre les rails de serrage (16), rails de soutien dans lesquels s'engrènent des éléments de verrouillage (24) qui sont fixés aux cassettes (12) et qui peuvent être actionnés manuellement par leurs faces extérieures ou encore frontales.

2. Revêtement de mur et/ou de plafond selon la revendication 1, caractérisé en ce que les éléments de verrouillage (24) sont placés respectivement dans les zones de coin et/ou les faces longitudinales des cassettes (12).

3. Revêtement de mur et/ou de plafond selon la revendication 1 et 2, caractérisé en ce que les éléments de verrouillage (24) comprennent un boulon moleté (26) avec un tourillon d'encliquetage (28) et un ressort qui est tendu à l'état verrouillé.

4. Revêtement de mur et/ou de plafond selon la revendication 3, caractérisé en ce que les blocages (22) comprennent une forure pour le logement du tourillon d'encliquetage en formant une fermeture à serrage.

5. Revêtement de mur et/ou de plafond selon les revendications 1 à 5, caractérisé par une matière amortissant le bruit fixée sur la face intérieure des cassettes (12).

6. Revêtement de mur et/ou de plafond selon l'une on plusieurs des revendications caractérisé par une dimension maximale des cassettes de 500 x 1000 mm.

7. Revêtement de mur et/ou de plafond selon l'une on plusieurs des revendications caractérisé par un tôle de aluminium avec une grosseur de 1,5 mm et résistant à l'eau maritim.

Fig.1